# EUROPEAN PATENT SPECIFICATION

(11) **EP 4 300 661 B1**
(45) Date of publication and mention of the grant of the patent: **04.06.2025**
(21) Application number: 22898780.6
(22) Date of filing: 01.09.2022
(51) Int. Cl.: H01M 10/6556, H01M 10/613, H01M 50/505, H01M 50/211, H01M 50/244, H01M 50/296

(54) **BATTERY MODULE AND BATTERY PACK INCLUDING THE SAME**
BATTERIEMODUL UND BATTERIEPACK DAMIT
MODULE DE BATTERIE ET BATTERIE LE COMPRENANT

(30) Priority: 24.11.2021 KR 20210163388
(43) Date of publication of application: 03.01.2024
(73) Proprietor: LG Energy Solution, Ltd., Seoul 07335 (KR)
(72) Inventor: JEONG, Jee Hoon, Daejeon 34122 (KR); JEON, Jongpil, Daejeon 34122 (KR); KIM, Min Seop, Daejeon 34122 (KR)
(74) Representative: Plasseraud IP
(86) International application number: PCT/KR2022/013130
(87) International publication number: WO 2023/096096

(56) References cited:
- DE-A1- 102017 114 330
- JP-A- 2011 029 103
- JP-A- 2014 011 086
- JP-A- 2015 122 165
- KR-A- 20130 090 700
- KR-A- 20210 020 413
- KR-A- 20210 063 201
- KR-A- 20210 127 318

## Description

### [TECHNICAL FIELD]

### Cross Citation with Related Application(s)

This application claims the benefit of Korean Patent Application No. 10-2021- 0163388 filed on November 24, 2021 with the Korean Intellectual Property Office.

The present disclosure relates to a battery module and a battery pack including the same, and more particularly to a battery module having a novel cooling structure and a battery pack including the same.

### [BACKGROUND]

With the technology development and increased demand for mobile devices, demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In small mobile devices, one, or two, or three battery cells are used per device, while middle or large-sized devices such as vehicles require high power and large capacity. Therefore, a middle or large-sized battery module having a plurality of battery cells electrically connected to one another is used.

Since middle or large-sized battery modules are preferably manufactured with as small a size and weight as possible, a prismatic battery, a pouch-type battery, or the like, which can be stacked with high integration and has a small weight relative to capacity, is mainly used as a battery cell of the middle or large-sized battery modules. Such a battery module has a structure in which a plurality of cell assemblies including a plurality of unit battery cells are connected in series to obtain high output. And, the battery cell includes positive and negative electrode current collectors, a separator, an active material, an electrolyte, and the like, and thus can be repeatedly charged and discharged through an electrochemical reaction between components.

Meanwhile, in recent years, amid the growing need for large-capacity structures including their utilization as an energy storage source, there is an increasing demand for battery packs having a multi-module structure formed by assembling a plurality of battery modules in which a plurality of secondary batteries are connected in series and/or in parallel.

Further, when a plurality of battery cells are connected in series or in parallel to configure a battery pack, it is common to configure a battery module composed of at least one battery cell first and then configure a battery pack by using at least one battery module and adding other components.

Generally, when the temperature of the secondary battery rises higher than an appropriate temperature, the performance of the secondary battery may be deteriorated, and in the worst case, there is also a risk of an explosion or ignition. In particular, a large number of secondary batteries, that is, a battery module or a battery pack having battery cells, can add up the heat generated from the large number of battery cells in a narrow space, so that the temperature can rise more quickly and excessively. In other words, a battery module in which a large number of battery cells are stacked, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a middle or large-sized battery module included in a vehicle battery pack, it is frequently exposed to direct sunlight and may be placed under high-temperature conditions such as summer or desert areas.

Conventionally, heat generated in the battery cells of a battery module was emitted only through a one-way path via the thermal conductive resin layer formed under the battery cell stack and the bottom part of the module frame. However, in recent years, the need for high capacity, high energy, fast charging, and the like has continuously increased, the amount of current flowing through the bus bar has increased, and the amount of heat generated from bus bars, battery cells, and electrode leads has also tended to increase. It is difficult to effectively cool such a heat generation only by a conventional cooling structure alone.

Therefore, there is a need for a novel structure for solving problems of bus bar heat generation that occur according to the needs of high capacity, high energy, fast charging, and the like.

Documents KR 2021 0063201 A discloses a battery module according to the preamble of claim 1. Further battery modules are disclosed in documents DE 10 2017 114330 A1, JP 2011 029103 A, KR 2021 0127318 A and JP 2014 011086 A.

### [DETAILED DESCRIPTION OF THE INVENTION]

### [Technical Problem]

It is an object of the present disclosure to provide a battery module that improves cooling performance by lowering the temperature of battery cells and bus bars, and a battery pack including the same.

However, the objects of the present disclosure are not limited to the aforementioned objects, and other objects which are not mentioned herein should be clearly understood by those skilled in the art from the following detailed description and the accompanying drawings.

### [Technical Solution]

According to one embodiment of the present disclosure, there is provided a battery module comprising: a battery cell stack in which a plurality of battery cells are stacked, a module frame that surrounds the battery cell stack, a bus bar frame that covers the portion of the battery cell stack exposed from the module frame, and a bus bar mounted on the bus bar frame and connected to an electrode lead protruding from the battery cell stack, wherein a cooling flow path is formed in the bus bar, the bus bar is formed with a slot through which the electrode lead passes, and the cooling flow path comprises a first flow path and a third flow path formed perpendicular to a direction in which the slot is formed, and a second flow path formed in parallel to a direction in which the slot is formed.

The cooling flow path is formed inside the bus bar to serve as a passage through which a coolant flows.

The bus bar is divided into two regions by the slot, and the first flow path and the third flow path may connect two regions of the bus bar.

The first flow path and the third flow path are respectively formed at an upper end and a lower end of the bus bar, and the second flow path may connect the first flow path and the third flow path respectively formed at the upper end and the lower end of the bus bar.

The battery module according to the present embodiment may further comprise a coolant inlet port formed at one end of the bus bar, and a coolant outlet port formed at the other end of the bus bar.

The coolant inlet port and the coolant inlet port may be formed of a non-conductive material.

The coolant inlet port may be formed at an upper end of the bus bar, and the coolant outlet port may be formed at a lower end of the bus bar.

The coolant may comprise cooling water, and the cooling water may comprise an insulated cooling water.

According to yet another embodiment of the present disclosure, there can be provided a battery pack comprising the above-mentioned battery module.

### [Advantageous Effects]

A battery module according to one embodiment of the present disclosure includes a cooling flow path formed inside the bus bar and thus, can cool the battery cells and bus bars that are heated under high current and fast charging environments. In addition, the stability of the battery module can be improved by minimizing the internal temperature deviation of the battery module.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view of a battery module of the present disclosure;
Fig. 2 is a perspective view showing a battery module in which the components of Fig. 1 are assembled;
Fig. 3 is a perspective view which shows a state of a bus bar included in a battery module according to one embodiment of the present disclosure;
Fig. 4 is a perspective view showing a cooling flow path formed in the bus bar of Fig. 3;
Fig. 5 is a diagram which enlarges and shows a part of a state cut along a section P2 of Fig. 3;
Fig. 6 is a diagram which shows a cross section taken along a section P1 of Fig. 2; and
Fig. 7 is a perspective view which shows a battery cell included in the battery module of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

The terms "first," "second," etc. are used to explain various components, but the components should not be limited by the terms. These terms are only used to distinguish one component from the other component.

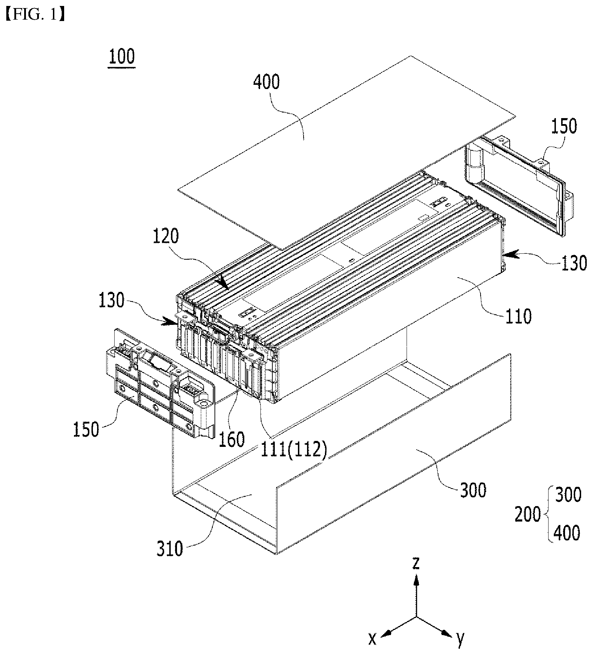

Hereinafter, a battery module of the present disclosure will be described with reference to Figs. 1, 2 and 7.

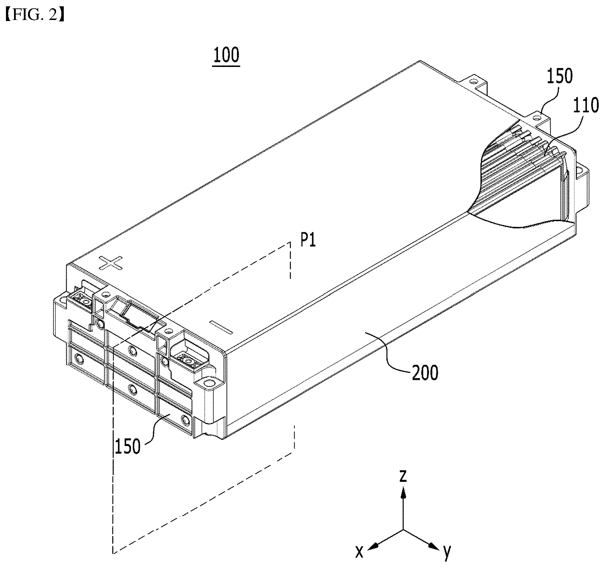

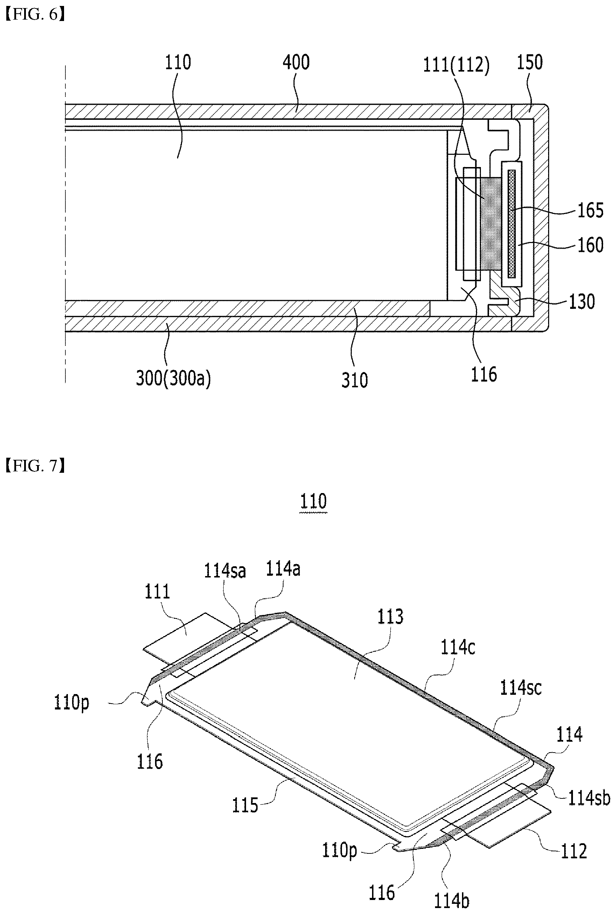

Fig. 1 is an exploded perspective view of a battery module of the present disclosure. Fig. 2 is a perspective view showing a battery module in which the components of Fig. 1 are assembled. Fig. 7 is a perspective view which shows a battery cell included in the battery module of the present disclosure.

Referring to Figs. 1 and 2, a battery module 100 according to the present embodiment includes a battery cell stack 120 in which a plurality of battery cells 110 are stacked, and a module frame 200 that surrounds the battery cell stack 120.

First, the battery cell 110 is preferably a pouch-type battery cell, and can be formed in a rectangular sheet-like structure. For example, referring to Fig. 7, the battery cell 110 according to the present embodiment has a structure in which two electrode leads 111 and 112 face each other and protrude from one end part 114a and the other end part 114b of the cell main body 113, respectively. That is, the battery cell 110 includes electrode leads 111 and 112 that are protruded in mutually opposite directions. More specifically, the electrode leads 111 and 112 are connected to an electrode assembly (not shown), and are protruded from the electrode assembly (not shown) to the outside of the battery cell 110.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts 114sa, 114sb and 114sc, wherein the sealing parts 114sa, 114sb and 114sc have a structure that is sealed by a method such as heat-sealing, and the remaining other side part may be composed of a connection part 115. The cell case 114 may be composed of a laminated sheet including a resin layer and a metal layer.

Additionally, the connection part 115 may extend long along one edge of the battery cell 110, and a bat-ear 110p may be formed at an end of the connection part 115. Further, while the cell case 114 is sealed with the protruding electrode leads 111 and 112 being interposed therebetween, a terrace part 116 may be formed between the electrode leads 111 and 112 and the cell main body 113. That is, the battery cell 110 may include a terrace part 116 formed to extend from the cell case 114 in the direction in which the electrode leads 111 and 112 protrude.

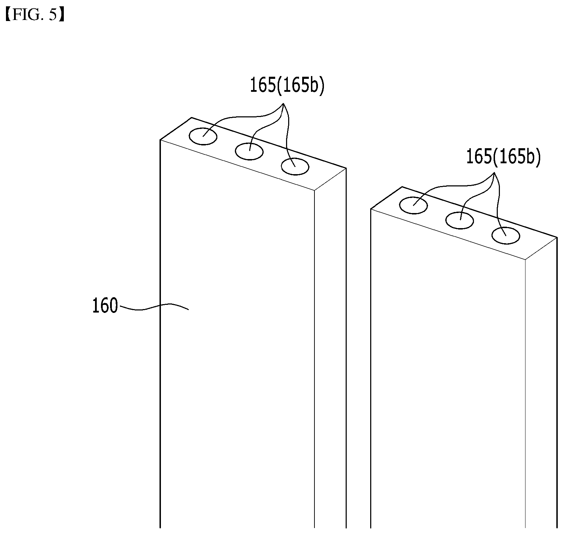

Such a battery cell 110 may be composed by a plurality of numbers, and the plurality of battery cells 110 may be stacked so as to be electrically connected to each other, thereby forming a battery cell stack 120. Particularly, as shown in Fig. 5, a plurality of battery cells 110 may be stacked along the direction parallel to the y-axis. Thereby, the electrode leads 111 and 112 may protrude in the x-axis direction and the -x-axis direction, respectively.

Meanwhile, when charge and discharge of the battery cells 110 are repeatedly performed, heat is generated. Even among them, a great amount of heat generates in a portion adjacent to the electrode leads 111 and 112. That is, as it approaches to the electrode leads 111 and 112 rather than the central portion of the cell main body 113, more heat is generated due to the charge and discharge, so that a structure for cooling the corresponding part may be required.

Meanwhile, the module frame 200 may include a U-shaped frame 300 which is opened in the upper surface, the front surface and the rear surface thereof and covers the lower part and both side parts of the battery cell stack 120, and an upper plate 400 that covers an upper part of the battery cell stack 120. At this time, the U-shaped frame 300 may include a bottom part 300a supporting the lower part of the battery cell stack 120, and side surface parts each extending upward from both ends of the bottom part 300a. However, the module frame 200 is not limited thereto, and can be replaced with a frame having another shape such as an L-shaped frame or a mono-frame that surrounds the battery cell stack 120 except the front and rear surfaces thereof. The battery cell stack 120 housed inside the module frame 200 can be physically protected through the module frame 200.

The upper plate 400 may cover the opened upper side surface of the module frame 200. The end plate 150 can cover the front and rear surfaces of the battery cell stack 120 that are opened in the module frame 200. The end plate 150 can be weld-coupled with the front and rear end edges of the upper plate 400 and the front and rear end edges of the module frame 200.

A bus bar frame 130 can be formed between the end plate 150 and the front and rear surfaces of the battery cell stack 120. The bus bar frame 130 can cover the portion of the battery cell stack 120 exposed from the module frame 200. Also, the plurality of bus bars 160 mounted on the bus bar frame 130 are formed so as to be protruded from the battery cells 110, and can be connected to the electrode leads 111 and 112 mounted on the bus bar frame 130. At this time, a slot 164 through which the electrode leads 111 and 112 pass is formed in the bus bar 160. Therefore, the bus bar 160 may be divided into two regions by the slot 164.

Further, the battery module 100 according to the present embodiment further includes a thermal conductive resin layer 310 located between the lower surface of the battery cell stack 120 and the bottom part of the module frame 200, that is, the bottom part 300a of the frame member 300, wherein the thermal conductive resin layer 310 may play a role of transferring heat generated in the battery cell 110 to the bottom of the battery module 100 and fixing the battery cell stack 120.

A conventional battery module is configured to release the heat generated in the battery cells through the thermal conductive resin layer formed at a lower part of the battery cell. However, the thermal conductive resin layer has a problem that it cannot efficiently cool the heat generated from the electrode leads and bus bar frames on the front and rear surfaces of the battery cell, and bus bars mounted to the bus bar frames.

Therefore, in a situation where the electrode lead and bus bar of the battery cell are made to generate high heat in a short period of time by the flow of high current, such as rapid charging, a structure capable of effectively cooling the heat is required.

Therefore, according to the present embodiment, a cooling flow path 165 is provided inside the bus bar 160, and a coolant is introduced through the cooling flow path 165, which enables cooling of the bus bar 160 and electrode leads 111 and 112 connected to the bus bar 160, thereby cooling the bus bar 160 and the electrode leads 111 and 112. As a result, it is possible to prevent the temperature rise, temperature deviation, and performance deterioration of the battery module, and to secure the safety of the battery module.

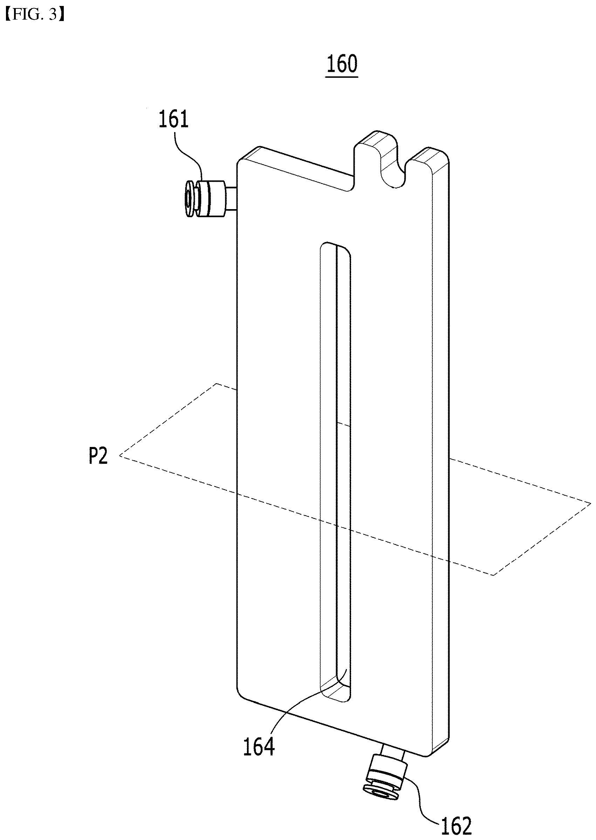

Next, a bus bar included in the battery module according to one embodiment of the present disclosure will be described in detail with reference to Figs. 3 to 6.

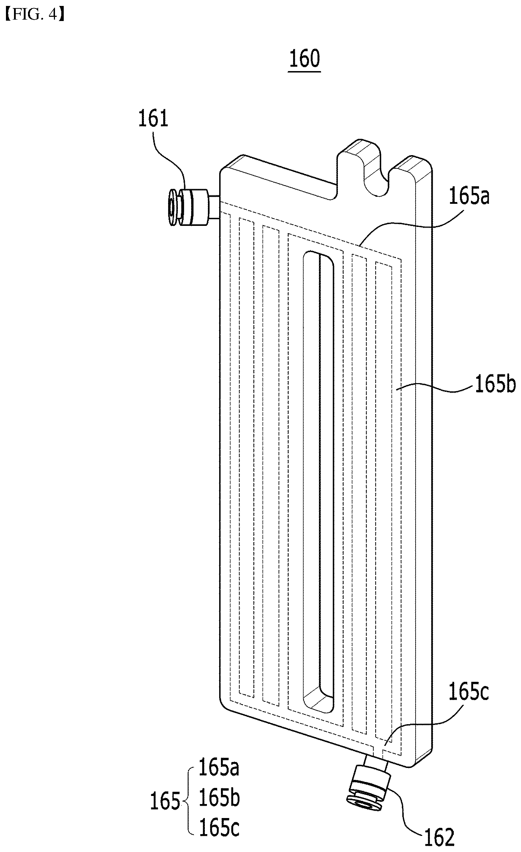

Fig. 3 is a perspective view which shows a state of a bus bar included in a battery module according to one embodiment of the present disclosure. Fig. 4 is a perspective view showing a cooling flow path formed in the bus bar of Fig. 3. Fig. 5 is a diagram which enlarges and shows a part of a state cut along a section P2 of Fig. 3. Fig. 6 is a diagram which shows a cross section taken along a section P1 of Fig. 2. Fig. 7 is a perspective view which shows a battery cell included in the battery module of the present disclosure.

Referring to Figs. 4 and 5, a cooling flow path 165 is formed in the bus bar 160 according to the present embodiment. At this time, the cooling flow path 165 is not particularly limited, but it has a structure for cooling the bus bar 160 and the electrode leads 111 and 112 connected to the bus bar 160 and may be a tubular shape formed in the bus bar 160.

The cooling flow path 165 is formed inside the bus bar 160. Therefore, the cooling flow path 165 is formed inside the bus bar 160 and serves as a passage through which a coolant flows. The cooling flow path 165 is formed inside the bus bar 160 so as not to be exposed to the outside, thereby forming a stable coolant flow.

The cooling flow path 165 is formed perpendicular to the direction in which the slot 164 of the bus bar 160 is formed, and is formed in parallel to the direction in which the slot 164 of the bus bar 160 is formed. Specifically, the cooling flow path 165 includes a first flow path 165a and a third flow path 165c that are formed perpendicular to the direction in which the slot 164 is formed, and a second flow path 165b that is formed in parallel to the direction in which the slot 164 is formed.

The flow paths 165 may be formed by a plurality of numbers. Particularly, a plurality of second flow paths 165b are formed in the bus bar 160 and allows the bus bar 160 in contact with the electrode leads 111 and 112 to cool, thereby improving the cooling performance of the battery module. Further, in Fig. 4, each of the first flow path 165a and the third flow path 165c is shown as one, but a case where the first flow paths 165a and third flow paths 165c are formed in plural numbers so as to be connected to the second flow path 165b may also be included.

At this time, the first flow path 165a may connect the two regions of the bus bar 160. Therefore, the third flow path 165c may also connect the two regions of the bus bar 160. That is, the first flow path 165a and the third flow path 165c connect the two regions of the bus bar 160 divided by the slot 164 of the bus bar 160, so that a flow of coolant can be supplied from one area to another.

Further, the first flow path 165a and the third flow path 165c are respectively formed at the upper end and the lower end of the bus bar 160, and the second flow path 165b may connect the first flow path 165a and the third flow path 165c respectively formed at the upper end and the lower end of the bus bar 160. Therefore, a continuous flow of a coolant is formed through the first flow path 165a, the second flow path 165b, and the third flow path 165c, whereby the cooling performance of the battery module 100 can be improved by cooling the bus bar 160.

Meanwhile, the battery module according to the present embodiment may further include a coolant inlet port 161 formed at one end of the bus bar 160, and a coolant outlet port 162 formed at the other end of bus bar 160.

Referring to Figs. 3 and 4, the coolant inlet port 161 may be connected to the first flow path 165a. Also, the coolant outlet port 162 may be connected to the third flow path 165c. Therefore, the coolant transferred through the coolant inlet port 161 may flow into the cooling flow path 165 through the first flow path 165a, and the coolant transferred as above may be transferred to the coolant outlet port 162 through the third flow path 165c and may flow out to the outside.

At this time, the coolant inlet port 161 and the coolant outlet port 162 may be formed of a non-conductive material. The material can be selected without limitation as long as it is a material that satisfies the performance as the coolant inlet port 161 and the coolant outlet port 162. Therefore, even if the coolant inlet port 161 and the coolant outlet port 162 are formed, it may be possible to secure insulation in the battery module 100. At this time, the non-conductive material is not limited to a specific material, but may include a synthetic resin material.

Meanwhile, the coolant inlet port 161 may be formed at the upper end of the bus bar 160. Further, the coolant outlet port 162 may be formed at the lower end of the bus bar 160. Thereby, it is possible to guide the flow of the coolant by gravity. However, the coolant inlet port 161 is formed at the lower end of the bus bar 160, and the coolant outlet port 162 may be formed at the upper end of the bus bar 160. At this time, in order to form a flow of the coolant, an additional component such as a pump can be included, thereby forming a flow of the coolant.

As described above, the battery module 100 according to the present embodiment may further include a coolant flowing along the coolant flow path 165. In addition, the coolant may include cooling water. At this time, in order to maintain and secure insulation in the battery module 100, the cooling water may include an insulated cooling water.

Thus, the battery module according to the present embodiment may include a plurality of bus bars 160, and a cooling flow path 165 may be formed in each bus bar 160. Therefore, referring to Fig. 6, in addition to the heat transfer path through which the heat generated in the battery cell 110 is discharged through the thermal conductive resin layer 310 located below the existing battery cell stack 120, a path through which the heat is further discharged to the outside by the cooling flow path 165 and the coolant is newly established, and thus, the heat transfer paths are diversified, thereby further improving the cooling performance of the battery module.

A battery pack according to another embodiment of the present disclosure will be described below.

The battery pack according to the present embodiment includes the battery module described above. In addition, the battery pack of the present disclosure may have a structure in which one or more of the battery modules according to the present embodiment are gathered, and packed together with a battery management system (BMS) and a cooling device that control and manage battery's temperature, voltage, etc.

The battery pack can be applied to various devices. Such a device can be applied to a vehicle means such as an electric bicycle, an electric vehicle, or a hybrid vehicle, but the present disclosure is not limited thereto, and is applicable to various devices that can use a battery module, which is also falls under the scope of the present disclosure.

Although preferred embodiments of the present disclosure have been described in detail above, the scope of the present disclosure is not limited thereto, and numerous other modifications and embodiments can be devised by those skilled in the art, without departing from the scope of the invention described in the appended claims. Further, these modifications should not be understood individually from the technical spirit or perspective of the present disclosure.

### [Description of Reference Numerals]

100: battery module
110: battery cell
120: battery cell stack
130: bus bar frame
150: end plate
160: bus bar
165: cooling flow path
200: module frame
300: U-shaped frame
400: upper plate

## Claims

1. A battery module (100) comprising:
a battery cell stack (120) in which a plurality of battery cells (110) are stacked,
a module frame (200) that surrounds the battery cell stack (120),
a bus bar frame (130) that covers the portion of the battery cell stack (120) exposed from the module frame (200), and
a bus bar (160) mounted on the bus bar frame (130) and connected to an electrode lead (111, 112) protruding from the battery cell stack (120),
**characterized in that**:
a cooling flow path (165) is formed in the bus bar (160),
the bus bar (160) is formed with a slot (164) through which the electrode lead (111, 112) passes, and
the cooling flow path (165) comprises a first flow path (165a) and a third flow path (165c) formed perpendicular to a direction in which the slot (164) is formed, and a second flow path (165b) formed in parallel to a direction in which the slot (164) is formed.

2. The battery module (100) according to claim 1 wherein:
the cooling flow path (165) is formed inside the bus bar (160) and serves as a passage through which a coolant flows.

3. The battery module (100) according to claim 1 wherein:
the bus bar (160) is divided into two regions by the slot (164), and
the first flow path (165a) and the third flow path (165c) connect the two regions of the bus bar (160).

4. The battery module (100) according to claim 1 wherein:
the first flow path (165a) and the third flow path (165c) are respectively formed at an upper end and a lower end of the bus bar (160), and the second flow path (165b) connects the first flow path (165a) and the third flow path (165c) respectively formed at the upper end and the lower end of the bus bar (160).

5. The battery module (100) according to claim 1, further comprising:
a coolant inlet port formed at one end of the bus bar (160), and a coolant outlet port formed at the other end of the bus bar (160).

6. The battery module (100) according to claim 5 wherein:
the coolant inlet port and the coolant outlet port are formed of a non-conductive material.

7. A battery pack comprising the battery module (100) as set forth in claim 1.

## Patentansprüche

1. Batteriemodul (100) umfassend:
einen Batteriezellenstapel (120), in welchem eine Mehrzahl von Batteriezellen (110) gestapelt ist,
einen Modulrahmen (200), welcher den Batteriezellenstapel (120) umgibt, einen Stromschienenrahmen (130), welcher den Abschnitt des Batteriezellenstapels (120) bedeckt, welcher von dem Modulrahmen (200) freigelegt ist, und
eine Stromschiene (160), welche an dem Stromschienenrahmen (130) montiert und mit einem Elektrodenleiter (111, 112) verbunden ist, welcher von dem Batteriezellenstapel (120) hervorsteht,
**dadurch gekennzeichnet, dass**:
ein Kühlungsflusspfad (165) in der Stromschiene (160) gebildet ist,
die Stromschiene (160) mit einer Ausnehmung (164) gebildet ist, durch welche der Elektrodenleiter (111, 112) passiert, und
der Kühlungsflusspfad (165) einen ersten Flusspfad (165a) und einen dritten Flusspfad (165c), welche senkrecht zu einer Richtung gebildet sind, in welche die Ausnehmung (164) gebildet ist, und einen zweiten Flusspfad (165b) umfasst,
welcher parallel zu einer Richtung gebildet ist, in welche die Ausnehmung (164) gebildet ist.

2. Batteriemodul (100) nach Anspruch 1, wobei:
der Kühlungsflusspfad (165) innerhalb der Stromschiene (160) gebildet ist und als eine Passage dient, durch welche ein Kühlmedium strömt.

3. Batteriemodul (100) nach Anspruch 1, wobei:
die Stromschiene (160) durch die Ausnehmung (164) in zwei Bereiche unterteilt ist, und
der erste Flusspfad (165a) und der dritte Flusspfad (165c) die zwei Bereiche der Stromschiene (160) verbinden.

4. Batteriemodul (100) nach Anspruch 1, wobei:
der erste Flusspfad (165a) und der dritte Flusspfad (165c) an einem oberen Ende beziehungsweise einem unteren Ende der Stromschiene (160) gebildet sind, und der zweite Flusspfad (165b) den ersten Flusspfad (165a) und den dritten Flusspfad (165c) verbindet, welche an dem oberen Ende beziehungsweise dem unteren Ende der Stromschiene (160) gebildet sind.

5. Batteriemodul (100) nach Anspruch 1, ferner umfassend:
einen Kühlmediumeinlassanschluss, welcher an einem Ende der Stromschiene (160) gebildet ist, und einen Kühlmediumauslassanschluss, welcher an dem anderen Ende der Stromschiene (160) gebildet ist.

6. Batteriemodul (100) nach Anspruch 5, wobei:
der Kühlmediumeinlassanschluss und der Kühlmediumauslassanschluss aus einem nicht-leitfähigen Material gebildet sind.

7. Batteriepack umfassend das Batteriemodul (100) wie in Anspruch 1 beschrieben.

## Revendications

1. Module de batterie (100) comprenant :
un empilement d'éléments de batterie (120) dans lequel une pluralité d'éléments de batterie (110) sont empilés,
un cadre de module (200) qui entoure l'empilement d'éléments de batterie (120),
un cadre de barre omnibus (130) qui recouvre la partie de l'empilement d'éléments de batterie (120) exposée à partir du cadre de module (200), et
une barre omnibus (160) montée sur le cadre de barre omnibus (130) et connectée à un fil d'électrode (111, 112) faisant saillie depuis l'empilement d'éléments de batterie (120),
**caractérisé en ce que** :
un trajet d'écoulement de refroidissement (165) est formé dans la barre omnibus (160), la barre omnibus (160) est pourvue d'une fente (164) à travers laquelle passe le fil d'électrode (111, 112), et
le trajet d'écoulement de refroidissement (165) comprend un premier trajet d'écoulement (165a) et un troisième trajet d'écoulement (165c) formés perpendiculairement à une direction dans laquelle est formée la fente (164), et un deuxième trajet d'écoulement (165b) formé parallèlement à une direction dans laquelle est formée la fente (164).

2. Module de batterie (100) selon la revendication 1, dans lequel :
le trajet d'écoulement de refroidissement (165) est formé à l'intérieur de la barre omnibus (160) et sert de passage à travers lequel circule un liquide de refroidissement.

3. Module de batterie (100) selon la revendication 1, dans lequel :
la barre omnibus (160) est divisée en deux régions par la fente (164), et
le premier trajet d'écoulement (165a) et le troisième trajet d'écoulement (165c) relient les deux régions de la barre omnibus (160).

4. Module de batterie (100) selon la revendication 1, dans lequel :
le premier trajet d'écoulement (165a) et le troisième trajet d'écoulement (165c) sont formés respectivement sur une extrémité supérieure et sur une extrémité inférieure de la barre omnibus (160), et le deuxième trajet d'écoulement (165b) relie le premier trajet d'écoulement (165a) et le troisième trajet d'écoulement (165c) formés respectivement sur l'extrémité supérieure et sur l'extrémité inférieure de la barre omnibus (160).

5. Module de batterie (100) selon la revendication 1, comprenant en outre :
un orifice d'entrée de liquide de refroidissement formé sur une extrémité de la barre omnibus (160), et un orifice de sortie de liquide de refroidissement formé sur l'autre extrémité de la barre omnibus (160).

6. Module de batterie (100) selon la revendication 5, dans lequel :
l'orifice d'entrée de liquide de refroidissement et l'orifice de sortie de liquide de refroidissement sont constitués d'un matériau non conducteur.

7. Bloc-batterie comprenant le module de batterie (100) selon la revendication 1.
